# EUROPEAN PATENT APPLICATION

(11) **EP 4 578 910 A1**
(43) Date of publication of application: **02.07.2025**
(21) Application number: 23856896.8
(22) Date of filing: 20.04.2023
(51) Int. Cl.: C08L 23/10, C08L 23/16, C08L 23/18, H01B 1/24, H01B 9/02, C08K 3/04

(54) **SEMICONDUCTIVE COMPOSITION AND POWER CABLE**

(30) Priority: 26.08.2022 JP 2022134933
(71) Applicant: SUMITOMO ELECTRIC INDUSTRIES, LTD., Osaka-shi, Osaka 541-0041 (JP)
(72) Inventor: YAMASAKI, Satoshi, Osaka-shi, Osaka 541-0041 (JP)
(74) Representative: Grünecker Patent- und Rechtsanwälte PartG mbB
(86) International application number: PCT/JP2023/015741
(87) International publication number: WO 2024/042776

(57) **Abstract**

A semiconductive composition for forming a semiconductive layer in a power cable, the composition including: a resin component including a propylene-based resin, and at least one selected from the group of a rubber material and an elastomer; and carbon black, wherein the rubber material and the elastomer each includes at least two units from among ethylene, propylene, butylene, hexene, isoprene, octene, and styrene, and the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

## Description

### [Technical Field]

The present application claims priority to Japanese Patent Application No. 2022-134933 filed on August 26, 2022, the entire disclosure of which is incorporated herein by reference.

The present disclosure relates to a semiconductive composition and a power cable.

### [Background Art]

Crosslinked polyethylene has been widely used as a resin component of an insulating layer in power cables and the like because of its excellent insulation properties (for example, PTL 1).

### [Citation List]

### [Patent Literature]

PTL 1: Japanese Patent Application Laid-Open No. S57-69611

### [Summary of Invention]

According to an aspect of the present disclosure, there is provided
a semiconductive composition for forming a semiconductive layer in a power cable, the composition including;
a resin component including a propylene-based resin, and at least one selected from the group of a rubber material and an elastomer; and
carbon black,
wherein the rubber material and the elastomer each includes at least two units from among ethylene, propylene, butylene, hexene, isoprene, octene, and styrene, and
the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

### [Brief Description of Drawing]

### [FIG. 1]

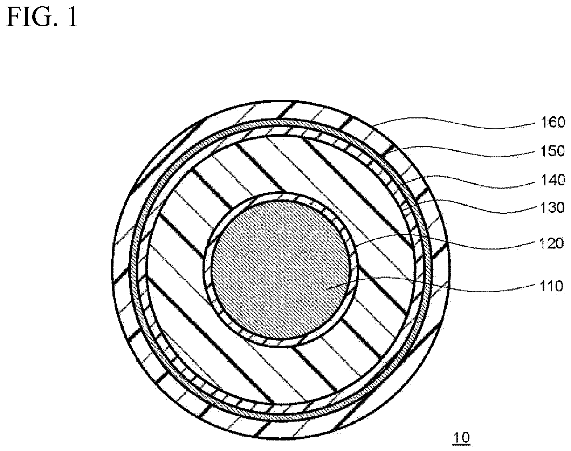

FIG. 1 is a schematic cross-sectional view perpendicular to the axial direction of a DC power cable according to an embodiment of the present disclosure.

### [Description of Embodiments]

### [Problem to be Solved by the Disclosure]

In the past, however, crosslinked polyethylene that has degraded over time could not be recycled and could only be incinerated, raising concerns about its impact on the environment.

Therefore, in recent years, a resin containing propylene (hereinafter, also referred to as "propylene-based resin") has attracted attention as a resin component forming an insulating layer in a power cable. Even when a propylene-based resin is non-crosslinked, the insulation properties required for a power cable can be satisfied. That is, both insulation properties and recyclability can be achieved. Furthermore, the use of a propylene-based resin can improve handleability, processability, and ease of manufacture.

However, according to studies conducted by the present inventors, it was confirmed that the outer diameter of a power cable is likely to be non-uniform in the cross section and longitudinal direction of the power cable when a propylene-based resin is used, compared with the case where polyethylene is used for cross-linking. In particular, it was confirmed that the outer diameter is likely to be non-uniform when the insulating layer is formed to be relatively thick with respect to the conductor and the outer diameter of the power cable is increased.

An objective of the present disclosure is to provide a technology for improving the uniformity of the outer diameter of a power cable when a propylene-based resin is used as a resin component.

### [Advantageous Effect of the Disclosure]

According to the present disclosure, the uniformity of the outer diameter of a power cable can be improved when a propylene-based resin is used as a resin component.

### <Description of the Embodiments of the Disclosure>

### [Findings Obtained by the Inventors]

First, findings obtained by the inventors will be briefly described.

As described above, in the case where a propylene-based resin is used as a coating material for a power cable, variation in the outer diameter is more likely to occur than in the case of crosslinked polyethylene because the propylene-based resin is not cross-linked.

In general, in the production of a power cable, first, a coating material for forming an inner semiconductive layer, a coating material for forming an insulating layer, and a coating material for forming an outer semiconductive layer are simultaneously extruded so as to be stacked onto the outer periphery of a conductor. If these coating materials are to be crosslinked, for example, the cable is introduced into a crosslinking tube and heated in a high-temperature environment. After crosslinking, the cable is introduced into, for example, a cooling tank, and the coating materials such as the inner semiconductive layer, the insulating layer, and the outer semiconductive layer are cooled. In this case, the viscosities of the coating materials increase during the crosslinking process, so that the coating material is easily maintained in the extruded shape, and the shape can be fixed as it is by cooling. In other words, crosslinking can limit sagging due to flowing of the coating materials and associated variation in the outer diameter of the power cable.

Meanwhile, in the case where a propylene-based resin is used to form the coating materials, since no crosslinking treatment is performed, the coating materials are subjected to cooling after being extruded. At this time, the stacked coating materials are cooled gradually from the surface side toward the inside. Therefore, the stacked coating materials may be in a condition such that while the shape of the surface side of the coating materials is fixed by cooling, the inside of the coating materials is still molten at a high temperature and is fluid. Moreover, since no crosslinking treatment is performed, the viscosities of the coating materials cannot be increased. As a result, the coating materials may sag due to their own weight before the inside of the coating materials is cooled and the shape thereof is fixed. With this sagging, the thickness of the coating layer may become non-uniform in the outer peripheral direction in the cross section of the power cable, and also become non-uniform in the longitudinal direction of the power cable. For example, when the power cable is conveyed in the horizontal direction by a horizontal extruder, the coating materials may sag downward in the cross section of the power cable, whereas when the power cable is conveyed in the vertical direction by a vertical extruder, the coating materials may sag downward in the longitudinal direction of the power cable. If the thickness of the insulating coating becomes non-uniform in the outer peripheral direction in the cross section or the longitudinal direction, a portion where insulation properties are locally lower occurs and desired insulation properties cannot be achieved in some cases.

The sagging of the coating materials is more likely to occur as the thicknesses of the extruded materials are greater, and the greater the thickness of the insulating layer and the greater the ratio of the thickness of the insulating layer to the outer diameter of the conductor, the more noticeable the sagging becomes.

This being the case, the inventors have studied a method for limiting sagging of the insulating layer in particular, which has a large effect on variation in the outer diameter, among the coating layers including the inner semiconductive layer, the insulating layer, and the outer semiconductive layer. Then, they focused on the viscosity of the semiconductive composition forming the outer semiconductive layer. This is because by setting the viscosity of the semiconductive composition high, sagging due to the flow of the resin composition forming the insulating layer, which is disposed on the inside thereof, can be limited and the shape can be maintained. Meanwhile, the semiconductive composition is also required to have extrusion moldability and is required to have a certain degree of viscosity so that extrusion can be performed at a constant thickness with stability.

In general, the viscosity of resin largely varies depending on the shear rate, and tends to be low at a high shear rate and high at a low shear rate. In the production of power cables, a semiconductive composition tends to have a high shear rate and a low viscosity at the stage of melt-kneading and extrusion. On the other hand, the shear rate tends to be low and the viscosity tends to be high at the stage from after the extrusion to the cooling. Further, when carbon black is blended into the semiconductive composition, the viscosities at a high rate and a low shear rate tend to be high overall.

In view of the above, the inventors studied the viscosities of the semiconductive composition respectively at the high shear rate and the low shear rate and found that, by adjusting each of the viscosities to be in a predetermined range, it is possible to achieve its extrusion moldability while also limiting the sagging before the shape is fixed by cooling. The inventors found that with such a semiconductive composition, uniformity of the outer diameter of a power cable can be improved.

The present disclosure has been achieved based on the above findings.

### [Embodiments of Disclosure]

Next, an embodiment of the present disclosure will be described.
[1] A semiconductive composition according to one aspect of the present disclosure is
   a semiconductive composition for forming a semiconductive layer in a power cable, the composition including:
   a resin component including a propylene-based resin, and at least one selected from the group of a rubber material and an elastomer; and
   carbon black,
   wherein the rubber material and the elastomer each includes at least two units from among ethylene, propylene, butylene, hexene, isoprene, octene, and styrene, and
   the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.
   According to this configuration, uniformity of the outer diameter of the power cable can be improved.
[2] A power cable according to one aspect of the present disclosure includes:
   a conductor;
   an insulating layer formed from a resin composition and covering an outer periphery of the conductor; and
   an outer semiconductive layer formed from a semiconductive composition and covering an outer periphery of the insulating layer,
   wherein the semiconductive composition includes
   a resin component including a propylene-based resin, and at least one selected from the group of a rubber material and an elastomer, and
   carbon black,
   the rubber material and the elastomer each includes at least two units from among ethylene, propylene, butylene, hexene, isoprene, octene, and styrene, and
   the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.
   According to this configuration, uniformity of the outer diameter can be improved.
[3] The power cable according to the above [2],
   wherein the content of the carbon black is 10 parts by mass or more and 100 parts by mass or less with respect to 100 parts by mass of the resin component.
   According to this configuration, uniformity of the outer diameter in the power cable can be further improved, and an electric field in the power cable can be made more uniform.
[4] The power cable according to the above [2] or [3],
   wherein the enthalpy of fusion of the resin component is 55 J/g or more and 90 J/g or less.
   According to this configuration, uniformity of the outer diameter can be improved more reliably.
[5] The power cable according to the above [2] or [3],
   wherein the melting point of the resin component is 140°C or higher and 170°C or lower.
   According to this configuration, uniformity of the outer diameter can be improved more reliably.
[6] The power cable according to the above [2] or [3],
   wherein in a cross section of the power cable perpendicular to a longitudinal direction of the power cable, a ratio of the major axis to the minor axis is 1.3 or less.
   According to this configuration, it is possible to improve uniformity of the outer diameter of the power cable in the outer peripheral direction in the cross section of the power cable.
[7] The power cable according to the above [2] or [3],
   wherein in cross sections of the power cable taken at two points spaced apart in a longitudinal direction of the power cable, a ratio of the major axis at one of the two points to the minor axis at the other one of the two points is 1.3 or less.
   According to this configuration, it is possible to improve uniformity of the outer diameter of the power cable in the longitudinal direction of the power cable.
[8] The power cable according to the above [2] or [3],
   wherein the thickness of the outer semiconductive layer is 0.5 mm or more, and a ratio of the outer diameter of the power cable to the outer diameter of the conductor is 4 or less.
   According to this configuration, even when the insulating layer is formed to be relatively thick with respect to the outer diameter of the conductor and the outer diameter of the power cable is increased, uniformity of the outer diameter can be maintained.

### [Details of Embodiment of the Disclosure]

Next, an embodiment of the present disclosure will be described with reference to drawing. It should be noted that the present disclosure is not limited to the following examples but is defined by the scope of the claims and all modifications within the meaning and scope equivalent to the scope of the claims are intended to be included.

### [Embodiment of the Disclosure]

### (1) Semiconductive Composition

A semiconductive composition of the present embodiment can be used as a material forming a semiconductive layer of a power cable. The composition may be used for a semiconductive layer, an outer semiconductive layer, or an inner semiconductive layer. The semiconductive composition includes a resin component including a propylene-based resin and at least one selected from the group of a rubber material and an elastomer, and carbon black. The semiconductive composition is adjusted such that the viscosities at a high shear rate and a low shear rate are in a predetermined range by mixing of these components. Specifically, the viscosity of the semiconductive composition at a high shear rate with a shear rate of 100 s⁻¹ at a temperature of 190°C is 1000 Pa·s or more and 5000 Pa·s or less, and the viscosity at a low shear rate with a shear rate of 1 s⁻¹ at a temperature of 190°C is 100000 Pa·s or more and 1000000 Pa·s or less.

The components of the semiconductive composition, the composition thereof, and physical properties such as the viscosity of the resin composition will be described in detail below.

### (1-1) Propylene-based Resin

The propylene-based resin is a base polymer of the semiconductive composition. Examples of the propylene-based resin include a propylene homopolymer (hereinafter, also referred to as homo-PP) and a propylene random polymer (hereinafter, also referred to as random-PP). The homo-PP has a propylene unit and the random-PP has a propylene unit and ethylene unit. From the viewpoint of obtaining higher flexibility in the semiconductive layer, the propylene-based resin may be the random-PP. The random-PP has an ethylene unit, and the amount of crystals is lower than that of the homo-PP, so that coarse crystals are not likely to be generated during cooling, and flexibility of the semiconductive layer can be further improved.

The content of the ethylene unit in the random-PP may be, for example, 0.5% by mass or more and 15% by mass or less. When the content of the ethylene unit is 0.5% by mass or more, generation of coarse crystals can be easily limited, and flexibility of the semiconductive layer can be maintained high. On the other hand, when the content of the ethylene unit is 15% by mass or less, it is possible to limit a decrease in the melting point and stably realize use in a non-crosslinked state or a micro-crosslinked state.

Examples of the stereoregularity of the propylene-based resin include isotactic, syndiotactic, and atactic. The stereoregularity is not particularly limited, but may be isotactic. When the stereoregularity is isotactic, it is possible to limit a decrease in the melting point of the semiconductive composition. As a result, it is possible to stably realize use in a non-crosslinking state or a micro-crosslinking state.

The viscosities of the propylene-based resin at a high shear rate and a low shear rate are not particularly limited. The viscosity at a high shear rate may be 100 Pa·s or more and 6000 Pa·s or less. The viscosity at a low shear rate may be 500 Pa·s to 50000 Pa·s or less. By having such a viscosity, the viscosity of the semiconductive composition can be easily adjusted to a predetermined viscosity. By adjusting the viscosities of the propylene-based resin, which serves as the base polymer, to the above-described ranges, when mixed with an elastomer or the like, the viscosity in the semiconductive composition at each shear rate can be more reliably adjusted to the above-described ranges.

As the propylene-based resin, one type of propylene-based resin having viscosities in predetermined ranges at a high shear rate and a low shear rate may be used singly, or two or more types of propylene-based resins having different viscosities may be used in combination. From the viewpoint of adjusting the viscosity of the resin composition to a predetermined range, two or more types may be used in combination.

As will be described later, a resin component such as a propylene-based resin has a viscosity curve that varies depending on physical properties such as a melting point, enthalpy of fusion, and molecular weight distribution. In the present embodiment, from the viewpoint of adjusting the viscosity of the semiconductive composition to a predetermined range, the physical properties of the propylene-based resin may be set as follows.

The melting point of the propylene-based resin is not particularly limited, but may be 160°C or higher and 175°C or lower in the case of a propylene homopolymer (homo-PP), and may be 140°C or higher and 150°C or lower in the case of a propylene random polymer (random-PP). According to such a propylene-based resin, the viscosity of the semiconductive composition can be easily adjusted to a predetermined range. Moreover, the melting point of the semiconductive composition can be increased to raise the heat-resistant temperature of, for example, the semiconductive layer. Thus, even when the semiconductive layer is non-crosslinked, a high property can be stably maintained in a high-temperature environment.

The enthalpy of fusion of the propylene-based resin is not particularly limited, but may be 100 J/g or more and 120 J/g or less in the case of homo-PP, and may be 90 J/g or more and 105 J/g or less in the case of random-PP. According to such a propylene-based resin, the viscosity of the semiconductive composition can be easily adjusted to a predetermined range, and the heat-resistant temperature of the semiconductive layer can be raised to stably maintain the various characteristics even in a high-temperature environment.

In the present description, the melting point and the enthalpy of fusion are measured as follows. First, the sample is subjected to differential scanning calorimetry (DSC) in accordance with, for example, JIS-K-7121 (1987). Specifically, in a DSC apparatus, the temperature is raised from room temperature (ambient temperature, for example, 27°C) to 220°C at 10°C/min. Thus, a DSC curve is obtained by plotting the endothermic heat amount (heat flow) per unit time with respect to temperature. Here, the temperature at which the endothermic heat amount per unit time in the sample becomes the maximum (peak) is defined as a "melting point (melting peak temperature)". In addition, it is assumed that the endothermic heat of the sample is absorbed entirely by the resin component, and a value (J/g) obtained by dividing the endothermic heat amount (J) of the sample from room temperature to 220°C by the mass (g) of the entire resin component in the sample is defined as an "enthalpy of fusion". The crystallinity (%) of the sample can be determined based on the enthalpy of fusion of the sample and the theoretical enthalpy of fusion of the complete crystal.

The propylene-based resin has a predetermined molecular weight distribution, and as the width of the molecular weight distribution increases, that is, as the ratio between the weight average molecular weight (Mw) and the number average molecular weight (Mn) in the molecular weight distribution increases, the difference between the viscosity at a high shear rate and the viscosity at a low shear rate tends to increase. From the viewpoint of adjusting the viscosity of the semiconductive composition at each shear rate to fall within the above-described range, Mw/Mn may be 3.0 or more and 8.0 or less, or may be 3.5 or more and 7.0 or less. The number average molecular weight Mn may be, for example, 60000 or more and 150000 or less. The weight average molecular weight Mw may be, for example, 210000 or more and 1000000 or less.

### (1-2) Rubber Material and Elastomer

The rubber material or the elastomer controls crystal growth of the propylene-based resin in the semiconductive composition, and imparts flexibility to the semiconductive layer. The rubber material or the elastomer may cause variation in the viscosity of the semiconductive composition at each shear rate by mixing with the propylene-based resin, but by mixing the rubber material or the elastomer to be in a predetermined viscosity range, it is possible to impart predetermined flexibility to the semiconductive layer. The rubber material or the elastomer of the present embodiment includes at least two of ethylene, propylene, butene, hexene, isoprene, octene, and styrene.

The viscosities of the rubber material or the elastomer at a high shear rate and a low shear rate are not particularly limited. The viscosity at a high shear rate may be 300 Pa·s or more and 7000 Pa·s or less. The viscosity at a low shear rate may be 4000 Pa·s or more and 80000 Pa·s or less. Alternatively, the viscosity of the rubber material at a high shear rate may be 500 Pa·s or more and 5000 Pa·s or less, and the viscosity at a low shear rate may be 10000 Pa·s or more and 70000 Pa·s or less. The viscosity of the elastomer at a high shear rate may be 1000 Pa·s or more and 6000 Pa·s or less, and the viscosity thereof at a low shear rate may be 5000 Pa·s or more and 50000 Pa·s or less. According to the rubber material or the elastomer having such viscosities, each viscosity of the semiconductive composition can be easily adjusted to a desired range when same is mixed with the propylene-based resin.

The melting point of the rubber material or the elastomer is not particularly limited. The rubber material generally does not have a melting point because a peak of an endothermic heat amount is not detected by DSC measurement. The elastomer may not have a melting point, or if it has a melting point, may have a melting point of 100°C or lower.

The enthalpy of fusion of the rubber material or the elastomer is not particularly limited. The enthalpy of fusion of the rubber material is none because the melting point thereof cannot be measured. The enthalpy of fusion of the elastomer may be 50 J/g or less, or 30 J/g or less.

Specifically, as the rubber material, a copolymer obtained by copolymerizing at least any two of ethylene, propylene, butene, hexene, and octene may be used.

The rubber material may be a copolymer containing propylene from the viewpoint of compatibility with the propylene-based resin. As the copolymer containing propylene, for example, ethylene propylene rubber (EPR) can be used.

The ethylene content of the EPR may be, for example, 20% by mass or more, 40% by mass or more, or 55% by mass or more. When the ethylene content is less than 20% by mass, it may not be possible to sufficiently control crystallization of the propylene-based resin. When the ethylene content is 20% by mass or more, the crystallization of the propylene-based resin by EPR can be sufficiently controlled while obtaining the effect produced by EPR to impart flexibility. The density of VLDPE is, for example, 0.855 g/cm³ or more and 0.890 g/cm³ or less.

The rubber material may be, for example, a copolymer containing no propylene. As the copolymer containing no propylene, for example, from the viewpoint of availability, very low density polyethylene (VLDPE) or the like can be used. Examples of the VLDPE include PE composed of ethylene and 1-butene and PE composed of ethylene and 1-octene. According to the copolymer containing no propylene, crystallization of the propylene-based resin can be stably controlled.

As the elastomer, for example, a styrene-based thermoplastic elastomer containing styrene as a hard segment and at least one of ethylene, propylene, butene, isoprene, and the like as a soft segment can be used. Similarly to the rubber material, the styrene-based thermoplastic elastomer is a component that is dispersed in the semiconductive composition to control crystal growth of the propylene-based resin, impart flexibility to the semiconductive layer, and contribute to adjustment of each viscosity of the semiconductive composition. Further, the styrene-based thermoplastic elastomer limits the occurrence of mechanical stress cracking in the semiconductive layer, thereby contributing also to the improvement of the water tree resistance of the semiconductive layer.

Examples of the styrene-based thermoplastic elastomer include a styrene-butadiene-styrene block copolymer (SBS), hydrogenated styrene-butadiene-styrene block copolymer, styrene-isoprene-styrene copolymer (SIS), hydrogenated styrene- isoprene- styrene copolymer, hydrogenated styrene butadiene rubber, hydrogenated styrene isoprene rubber, and styrene ethylene butylene olefin crystal block copolymer. Two or more of these may be used in combination.

The term "hydrogenated" as used herein means that hydrogen is added to a double bond. For example, the term "hydrogenated styrene-butadiene-styrene block copolymer" means a polymer obtained by adding hydrogen to a double bond of a styrene-butadiene-styrene block copolymer. Note that no hydrogen is added to the double bond of the aromatic ring of styrene. The "hydrogenated styrene-butadiene-styrene block copolymer" can be also referred to as a styrene-ethylene-butylene-styrene block copolymer (SEBS).

The styrene-based thermoplastic elastomer may have no double bond in its chemical structure. When a material having a double bond is used, the resin component may be thermally degraded, e.g., during molding of the semiconductive composition, and the characteristics of the obtained semiconductive layer may be degraded. In this regard, a material having no double bond has high resistance to thermal degradation, so that the characteristics of the semiconductive layer can be maintained higher.

The content of the styrene in the styrene-based thermoplastic elastomer is not particularly limited, but may be 5% by mass or more and 35% by mass or less from the viewpoint of controlling crystal growth of the propylene-based resin and improved flexibility of the semiconductive layer.

### (1-3) Carbon Black

Carbon black is added to and mixed with the resin component to impart conductivity to the resin component. For example, furnace carbon black or acetylene carbon black is preferably used as the carbon black. Here, furnace carbon black refers to carbon black produced by burning oil or the like. Acetylene carbon black refers to carbon black produced by thermally decomposing acetylene as a raw material.

An average particle size of the carbon black is not particularly limited, and is preferably appropriately set in a range that allows the carbon black to be dispersed appropriately in the semiconductive layer and obtain a desired conductivity. For example, the average particle size may be 35 nm or more and 100 nm or less. The average particle size here indicates a particle size at an integrated value of 50% in a particle size distribution obtained by particle size measurement using a laser diffraction/scattering method.

### (1-4) Other Additives

In addition to the resin components and carbon black described above, the semiconductive composition may contain, for example, an antioxidant, a copper inhibitor, a lubricant, and a colorant.

Note that the semiconductive composition may contain, for example, a small amount of an additive that functions as a nucleating agent that generates crystals of propylene, or may not substantially contain such an additive. Specifically, the content of the additive functioning as the nucleating agent may be less than 1 part by mass or may be 0 parts by mass, for example, when the total amount of the resin component including the propylene-based resin and at least one selected from the group of the rubber material and the elastomer is 100 parts by mass. Accordingly, the occurrence of unexpected abnormal crystallization caused by the nucleating agent can be limited, and the crystal amount can be easily controlled.

The semiconductive composition may contain an inorganic filler, but from the viewpoint of adjusting the viscosities at a high shear rate and a low shear rate to predetermined ranges, the amount of addition may be small or may be zero.

### (1-5) Viscosity of Semiconductive Composition

The semiconductive composition is formed by mixing a propylene-based resin, at least one selected from the group of a rubber material and an elastomer, and carbon black, and by mixing these components, the viscosity of the semiconductive composition at a high shear rate with a shear rate of 100 s⁻¹ at a temperature of 190°C is 1000 Pa·s or more and 5000 Pa·s or less, and the viscosity at a low shear rate with a shear rate of 1 s⁻¹ at a temperature of 190°C is 100000 Pa·s or more and 1000000 Pa·s or less.

The propylene-based resin, the rubber material, and the elastomer each have a unique viscosity curve. The viscosity curve is a declining curve in which the horizontal axis indicates the shear rate and the vertical axis indicates the viscosity, and the viscosity decreases as the shear rate increases. The viscosity curve has a unique shape depending on the molecular weight, molecular weight distribution, melting point, enthalpy of fusion, and the like of the resin. Not only when the types of the propylene-based resin, the rubber material, the elastomer, and the like are different, but also when the physical properties such as the molecular weight distribution and the melting point are different even with the same propylene-based resin, the viscosity curves assume a different shape. Due to the difference in the viscosity curve, the gradient of the viscosity curve, the range of viscosity at a high shear rate or a low shear rate, and the like, are different. In the present embodiment, the viscosity at each shear rate is adjusted by mixing a propylene-based resin, rubber material, and elastomer having different viscosity curves. Moreover, by adding carbon black to the resin component, the viscosity curve of the semiconductive composition is controlled, and the viscosity at each shear rate is adjusted.

In the semiconductive composition, if the viscosity at a high shear rate is less than 1000 Pa·s, it may not be possible to extrude the molten semiconductive composition stably with a uniform thickness while maintaining its shape. On the other hand, if the viscosity at a high shear rate exceeds 5000 Pa·s, the pressure when extruding the semiconductive composition becomes high, and the extrusion amount is not stable, so that it may not be possible to extrude the semiconductive composition with a uniform thickness. In this regard, by adjusting the viscosity at a high shear rate to fall within the range of 1000 Pa·s to 5000 Pa·s, the semiconductive composition can be extruded with a uniform thickness while limiting flow of the coating material for forming the insulating layer and maintaining its shape. The viscosity at a high shear rate may also be 1000 Pa·s to 3000 Pa·s.

If the viscosity at a low shear rate is less than 100000 Pa·s, the flow (sagging) of the coating material for forming the insulating layer during the production of the power cable cannot be limited, and variation in the outer diameter is likely to occur. On the other hand, if the viscosity at a low shear rate exceeds 1000000 Pa·s, the viscosity at a high shear rate also increases accordingly, so that the extrusion amount of the semiconductive composition becomes unstable as described above, and it may not be possible to form the semiconductive layer with a uniform thickness. In this regard, by adjusting the viscosity at a low shear rate to fall within the range of 100000 Pa·s to 1000000 Pa·s, the sagging of the extruded semiconductive composition can be limited, and the uniformity of the outer diameter of the power cable can be improved. The viscosity at a low shear rate may also be 100000 Pa·s to 300000 Pa·s.

The ratio between the viscosity at a high shear rate and the viscosity at a low shear rate is not particularly limited, but given that the viscosity at a high shear rate is A and the viscosity at a low shear rate is B, B/A may be 30 or more and 1000 or less. The greater this ratio is, the lower the pressure at which the molten semiconductive composition can be extruded, and the sagging of the material that forms the insulating layer can be limited during the production of the power cable.

The viscosities at the high shear rate and the low shear rate were measured according to the procedure described in examples below.

### (1-6) Melting Point and Enthalpy of Fusion of Semiconductive Composition

The melting point and the enthalpy of fusion of a semiconductive composition vary depending on the blending amounts of a propylene-based resin, a rubber material, and an elastomer mixed as resin components. In other words, the melting point and the like serve as an index of the ratio (make-up) of each component. The melting point and enthalpy of fusion of the semiconductive composition are substantially the same as those of the resin components excluding the carbon black.

A propylene-based resin has a relatively high melting point, whereas a rubber material and an elastomer do not have a melting point or have a low melting point if they have a melting point. The propylene-based resin has high crystallinity and a high enthalpy of fusion, whereas the rubber material and the elastomer have low crystallinity or are amorphous and have a low enthalpy of fusion. Therefore, the melting point and the enthalpy of fusion of the resin components in the semiconductive composition tend to be lower than the inherent melting point and enthalpy of fusion of the propylene-based resin.

The melting point and the enthalpy of fusion of the resin components are not particularly limited, but may be in the following ranges, from the viewpoint of mixing each component at an appropriate ratio and adjusting the viscosities at a high shear rate and a low shear rate to the predetermined ranges.

Specifically, the melting point of the resin components may be 158°C or higher and 168°C or lower when homo-PP is contained as the propylene-based resin. It may be 140°C or higher and 150°C or lower when random-PP is contained as the propylene-based resin.

The enthalpy of fusion of the resin components may be 75 J/g or more and 110 J/g or less when homo-PP is contained as the propylene-based resin. It may be 60 J/g or more and 100 J/g or less when random-PP is contained as the propylene-based resin.

By mixing the propylene-based resin, the rubber material, and the elastomer at a predetermined ratio so that at least one of the melting point and the enthalpy of fusion of the resin components is in the above-described range, it is possible to more easily adjust the viscosities at a high shear rate and a low shear rate to predetermined ranges.

### (1-7) Make-up of Resin

The ratio (make-up) of each component in the semiconductive composition is preferably appropriately adjusted according to the types of the propylene-based resin, the rubber material, and the elastomer so that the viscosities at a high shear rate and a low shear rate are in predetermined ranges. From the viewpoint of more reliably adjusting the viscosities to predetermined ranges, each component is preferably mixed so that the melting point and the enthalpy of fusion of the resin components are in the ranges described above. Specifically, in the resin composition, the addition ratio of the propylene-based resin may be 50% by mass or more. Two or more types of propylene-based resins having different viscosities, melting points, and enthalpies of fusion may be used in combination. For the rubber material and the elastomer, two or more types of components having different physical properties described above may be used in combination.

The content of the carbon black in the semiconductive composition is not particularly limited. Carbon black is a factor to increase the viscosity at each shear rate when mixed with the resin components. Therefore, it is preferable to appropriately change the content so that the viscosity at each shear rate is in a predetermined range while the conductivity required for the semiconductive layer is satisfied. For example, the content of the carbon black may be 10 parts by mass or more and 100 parts by mass or less, or 10 parts by mass or more and 80 parts by mass or less with respect to 100 parts by mass of the resin component.

### (2) Power Cable

Next, a power cable of the present embodiment will be described with reference to FIG. 1. FIG. 1 is a cross-sectional view perpendicular to the axial direction of a power cable according to the present embodiment.

A power cable 10 of the present embodiment is configured as a so-called solid insulated power cable. In addition, the power cable 10 of the present embodiment is configured to be laid on land (in a pipeline), under water, or in a subaqueous area (e.g., seabed or riverbed), for example. The power cable 10 is used, for example, for alternating current.

Specifically, the power cable 10 includes, for example, a conductor 110, an inner semiconductive layer 120, an insulating layer 130, an outer semiconductive layer 140, a shielding layer 150, and a sheath 160.

### [Conductor (Conductive Unit)]

The conductor 110 is configured by twisting together a plurality of conductor core wires (conductive core wires) including, for example, pure copper, a copper alloy, aluminum, or an aluminum alloy.

### [Inner Semiconductive Layer]

The inner semiconductive layer 120 is provided so as to cover the outer periphery of the conductor 110. The inner semiconductive layer 120 has semiconductivity and is configured to limit electric field concentration on the surface side of the conductor 110. The inner semiconductive layer 120 is formed from a semiconductive composition including a resin component and carbon black. As the resin component, for example, at least any one of ethylene-based copolymers such as an ethylene-ethyl acrylate copolymer, an ethylene-methyl acrylate copolymer, an ethylene-butyl acrylate copolymer, and an ethylene-vinyl acetate copolymer, an olefin-based elastomer, a propylene-based resin, and the like, can be used. Furthermore, the above-described semiconductive composition whose viscosity at each shear rate is adjusted to a predetermined range may be used.

### [Insulating layer]

The insulating layer 130 is provided so as to cover the outer periphery of the inner semiconductive layer 120. A propylene-based resin is preferably used as the material forming the insulating layer 130 from the viewpoint of not performing cross-linking. Fron the viewpoint of improving flexibility of the insulating layer 130, a resin component including the above-described propylene-based resin and at least one selected from the group of the rubber material and elastomer may be used. The insulating layer 130 is formed, for example, by extruding a resin composition containing the resin component.

### [Outer Semiconductive Layer]

The outer semiconductive layer 140 is provided so as to cover the outer periphery of the insulating layer 130. The outer semiconductive layer 140 has semiconductivity and is configured to limit electric field concentration between the insulating layer 130 and the shielding layer 150. The outer semiconductive layer 140 is formed from the above-described semiconductive composition whose viscosity at each shear rate is adjusted to a predetermined range.

### [Shielding Layer]

The shielding layer 150 is provided so as to cover the outer periphery of the outer semiconductive layer 140. The shielding layer 150 is configured by, for example, winding a copper tape, or is configured as a wire shield in which a plurality of soft copper wires or the like are wound. A tape made of a rubber cloth or the like may be wound inside or outside the shielding layer 150.

### [Sheath]

The sheath 160 is provided so as to cover the outer periphery of the shielding layer 150. The sheath 160 is constituted from, for example, polyvinyl chloride or polyethylene.

If the power cable 10 of the present embodiment is an underwater cable or a subaqueous cable, it may have a water-shielding layer made of metal such as a so-called aluminum cover or an iron wire armoring on the outside of the shielding layer 150. On the other hand, since the power cable 10 of the present embodiment has the above-described water tree suppressing effect, for example, it is not necessary to have a water-shielding layer made of metal such as a so-called aluminum cover on the outside of the shielding layer 150. That is, the power cable 10 of the present embodiment may be configured by an incompletely water-shielding structure.

### [Specific Dimensions and the like]

Although specific dimensions of the power cable 10 are not particularly limited, for example, the diameter of the conductor 110 is 5 mm or more and 60 mm or less, the thickness of the inner semiconductive layer 120 is 0.5 mm or more and 3 mm or less, the thickness of the insulating layer 130 is 3 mm or more and 35 mm or less, the thickness of the outer semiconductive layer 140 is 0.5 mm or more and 3 mm or less, the thickness of the shielding layer 150 is 0.1 mm or more and 5 mm or less, and the thickness of the sheath 160 is 1 mm or more. The outer diameter of the power cable 10 is, for example, 15 mm or more and 170 mm or less. The thickness of the outer semiconductive layer 140, in particular, may be 0.5 mm or more, or 1 mm or more, from the viewpoint of further limiting variation in the outer diameter. The AC voltage applied to the power cable 10 of the present embodiment is, for example, 20 kV or more.

As described above, the greater the thickness of the insulating layer 130, particularly the higher the ratio of the thickness of the insulating layer 130 to the outer diameter of the conductor 110, the easier the insulating layer 130 is to deform. In this regard, in the present embodiment, the outer semiconductive layer 140 is formed using a semiconductive composition whose viscosity at each shear rate is adjusted to a predetermined range, so that sagging due to the flow of the insulating layer 130 is limited and its shape is easily maintained. Therefore, even if the insulating layer 130 is formed relatively thick with respect to the outer diameter of the conductor 110 and the outer diameter of the power cable 10 is increased, the variation in the outer diameter can be limited. For example, even if the thickness of the insulating layer 130 is 4 mm or more and the ratio of the outer diameter of the power cable 10 to the outer diameter of the conductor 110 is 4 or less, the variation in the outer diameter can be limited. From the viewpoint of more reliably limiting variation in the outer diameter, the thickness of the insulating layer 130 may be 13 mm or less. In addition, the ratio of the outer diameter of the power cable 10 to the outer diameter of the conductor 110 may be 4 or less. The outer diameter of the conductor 110 may be in the range of 8 mm² or more to 900 mm² or less in terms of the cross-sectional area of the conductor 110.

### (3) Various Cable Characteristics

In the present embodiment, since the outer semiconductive layer 140 is formed from the semiconductive composition described above, the following various cable characteristics are secured.

### [Uniformity of Outer Diameter]

In the power cable 10 of the present embodiment, the sagging of the insulating layer 130 is limited, and thus variation in the outer diameter in each of the cross section and the longitudinal direction is small.

Small variation in the outer diameter in the cross section indicates that in the cross section perpendicular to the longitudinal direction of the power cable 10, the difference between the maximum value and the minimum value of the outer diameter in the outer peripheral direction is small. Specifically, when the major axis (maximum value of the outer diameter) in the cross section is A1 and the minor axis (minimum value of the outer diameter) is B1, the ratio (A1/B1) of the major axis to the minor axis may be 1.3 or less, or may be 1.25 or less. The lower limit of the ratio is 1.

Small variation in the outer diameter in the longitudinal direction indicates that in the cross sections at two points spaced apart in the longitudinal direction of the power cable 10, the difference in the outer diameter between the two points is small. Specifically, when the outer diameters at two points spaced apart by 5 m in the longitudinal direction are compared, and the minor axis at one of the two points is A₂ and the major axis at the other one of the two points is B₂ (A₂ < B₂), then the ratio (B₂/A₂) of the major axis B₂ at the other point to the minor axis A₂ at the one point may be 1.3 or less, or may be 1.25 or less. The lower limit of the ratio is 1.

### (4) Method of Manufacturing Power Cable

Next, a method of manufacturing the power cable of the present embodiment will be described. Hereinafter, a "step" is abbreviated as "S".

### [S100: Coating Material Preparation Step]

First, coating material for forming the inner semiconductive layer 120, the insulating layer 130, and the outer semiconductive layer 140 is prepared.

The semiconductive composition for forming the outer semiconductive layer 140 is preferably prepared as follows.

First, the propylene-based resin, at least one selected from the group of the rubber material and elastomer, carbon black, and other additives (antioxidants, etc.) as necessary are mixed (kneaded) with a mixer to form a mixture. At this time, the propylene-based resin, the rubber material, elastomer, and the carbon black are mixed at a predetermined ratio so that the viscosities at a high shear rate and a low shear rate in the semiconductive composition are in predetermined ranges. Alternatively, the propylene-based resin, the rubber material, and the elastomer are mixed so that the melting point and enthalpy of fusion of the resin component are in a predetermined range, and the content of the carbon black is preferably appropriately adjusted within a range such that the desired semiconductivity can be obtained. Examples of the mixer include an open roll mixer, a Banbury mixer, a pressure kneader, a single-screw mixer, and a multi-screw mixer.

After the mixture is formed, the mixture is granulated by an extruder. This forms a pellet-shaped semiconductive composition that will form the outer semiconductive layer 140. The steps from the mixing to the granulation may be performed collectively using a twin-screw extruder having a high kneading effect.

The semiconductive composition for forming the inner semiconductive layer 120 may be a conventionally known composition. For example, a composition that contains a propylene-based resin and carbon black and can be used without crosslinking may be used. Alternatively, for example, the semiconductive composition for forming the outer semiconductive layer 140 described above may be used.

The resin composition for forming the insulating layer 130 is not particularly limited, and a conventionally known composition may be used. For example, a composition that contains a propylene-based resin may be used. Alternatively, for example, the composition that contains the propylene-based resin and at least one selected from the group of the rubber material and elastomer described above may be used.

### [S200: Conductor Preparation Step]

In addition, the conductor 110 is prepared that is formed by twisting together a plurality of conductor core wires.

### [S300: Cable Core Formation Step]

After the coating material preparation step S100 and the conductor preparation step S200 are completed, for example, a three-layer co-extruder is used to extrude the respective coating materials so as to cover the outer periphery of the conductor 110 with a predetermined thickness.

Specifically, for example, the semiconductive composition for forming the inner semiconductive layer is put into an extruder A, which makes up the three-layer co-extruder and forms the inner semiconductive layer 120.

The pellet-shaped resin composition is put into an extruder B, which forms the insulating layer 130, as a coating material for forming the insulating layer. The preset temperature of the extruder B is set to a temperature that is 10°C to 50°C higher than the desired melting point. The preset temperature may be adjusted appropriately based on the linear velocity and extrusion pressure.

The above-described semiconductive composition is put into an extruder C, which forms the outer semiconductive layer 140.

The extrudates from the extruders A to C are then guided to a common head, and the inner semiconductive layer 120, the insulating layer 130, and the outer semiconductive layer 140 are simultaneously extruded onto the outer periphery of the conductor 110 from the inside to the outside. At this time, the semiconductive composition for forming the outer semiconductive layer 140 can be extruded stably with a uniform thickness because its viscosity at a high shear rate is adjusted to 1000 Pa·s or more and 5000 Pa·s or less. In this way, the extruded material that will become the cable core is formed.

Then, the extruded material is cooled, for example using water. This solidifies each coating material and fixes its shape.

In the present embodiment, the viscosity of the semiconductive composition for forming the outer semiconductive layer at a low shear rate is adjusted to 100000 Pa·s or more and 1000000 Pa·s or less, so that the flow (sagging) of the coating material that forms the insulating layer 130 located inside thereof can be limited. Therefore, each coating material can be fixed in the extruded shape. As a result, the thickness of the insulating coating formed by the inner semiconductive layer 120, the insulating layer 130, and the outer semiconductive layer 140 can be made uniform in each of the outward direction in the cross section and the longitudinal direction of the extruded material.

By the above cable core formation step S300, a cable core constituted by the conductor 110, the inner semiconductive layer 120, the insulating layer 130, and the outer semiconductive layer 140 is formed.

### [S400: Shielding Layer Formation Step]

After the cable core is formed, the shielding layer 150 is formed on the outside of the outer semiconductive layer 140 by, for example, winding a copper tape.

### [S500: Sheath Formation Step]

After the shielding layer 150 is formed, vinyl chloride is put into the extruder and extruded to form the sheath 160 on the outer periphery of the shielding layer 150.

Through the above steps, the power cable 10 as a solid insulated power cable is manufactured.

### (5) Summary of Embodiments

According to the present embodiment, one or more effects described below are achieved.
(a) The semiconductive composition of the present embodiment has a viscosity at a high shear rate of 1000 Pa·s to 5000 Pa·s. Accordingly, when the semiconductive composition is melted and extruded, the composition can be stably extruded with a uniform thickness while maintaining the extruded shape. The viscosity thereof at a low shear rate is 100000 Pa·s to 1000000 Pa·s. Accordingly, when the semiconductive composition is extruded onto the outer periphery of the coating material that forms the insulating layer 130, the semiconductive composition can press the coating material of the insulating layer 130. As a result, sagging due to the own weight of the coating material is limited, and the insulating layer 130 can be maintained in the extruded shape. In other words, the insulating layer 130 can be more easily fixed in the extruded shape. In this way, the semiconductive composition of the present embodiment has a suitable viscosity when melted and extruded, so that the desired extrusion moldability can be obtained, and also has a relatively high viscosity after extrusion, which inhibits flow and allows the extruded shape to be maintained.
(b) In the power cable 10 of the present embodiment, by forming the outer semiconductive layer 140 using the above-described semiconductive composition, it is possible to obtain a uniform outer diameter in each of the outer peripheral direction in the cross section of the power cable 10 and the longitudinal direction of the power cable 10. In other words, it is possible to reduce variation in the outer diameter in the cross section and the longitudinal direction of the power cable 10. Specifically, in the cross section of the power cable 10, the ratio of the maximum outer diameter (major axis) to the minimum outer diameter (minor axis) in the outer peripheral direction can be made to be 1.3 or less. In addition, in cross sections of the power cable taken at two points spaced apart in a longitudinal direction of the power cable 10, the ratio of the major axis at one point to the minor axis at the other point can be made to be 1.3 or less.
(c) The semiconductive composition contains at least one selected from the group of a rubber material and an elastomer together with the propylene-based resin, and thus excessive crystal growth of the propylene-based resin can be limited during the cooling process from the molten state. Accordingly, it is possible to obtain a high level of desired conductivity and flexibility in a well-balanced manner in the outer semiconductive layer 140.
(d) In the semiconductive composition, the content of the carbon black may be 10 parts by mass or more and 100 parts by mass or less with respect to 100 parts by mass of the resin component. With such a content, the viscosity of the semiconductive composition at each shear rate can be more reliably adjusted to a predetermined range while obtaining a predetermined semiconductivity. As a result, variation in the outer diameter of the power cable 10 can be more reliably limited, and the electric field in the power cable 10 can be made more uniform, thereby limiting partial discharge.
(e) In the semiconductive composition, the melting point of the resin component may be 140°C to 150°C if random-PP is included, and 158°C to 168°C if homo-PP is included. The enthalpy of fusion of the resin component may be 60 J/g to 100 J/g if random-PP is included, and 75 J/g to 110 J/g if homo-PP is included. In the semiconductive composition, by ensuring that at least one of the melting point and enthalpy of fusion of the resin component satisfies a predetermined range, the addition ratio of the propylene-based resin, the rubber material, and the elastomer can be set to an appropriate range, and the viscosities at a high shear rate and a low shear rate can be more reliably adjusted to the above range. Moreover, higher flexibility can be obtained in the outer semiconductive layer 140.
(f) According to the semiconductive composition, the viscosity at a low shear rate is relatively large, i.e., 100000 Pa·s or more, so that even when the insulating layer 130 is made thick with respect to the outer diameter of the conductor 110, deformation of the insulating layer 130 can be limited. Specifically, by forming the outer semiconductive layer 140 to have a thickness of 0.5 mm or more, even when the insulating layer 130 is formed to be thick with respect to the outer diameter of the conductor 110 so that the ratio of the outer diameter of the power cable 10 to the outer diameter of the conductor 110 is 4 or less, variation in the outer diameter can be limited to be small.
(g) Furthermore, according to the semiconductive composition, when the power cable 10 is produced, it is possible to limit variation in the outer diameter in the longitudinal direction, which is particularly likely to occur when a vertical extruder is used, and also limit variation in the outer diameter in the outer peripheral direction of the cross section, which is particularly likely to occur when a horizontal extruder is used.
(h) Furthermore, in the power cable 10, since the semiconductive composition has a low viscosity at a low shear rate, the shape of the insulating layer 130 can be maintained even if the coating material that forms the insulating layer 130 has a low viscosity. Specifically, even if the viscosity at a low shear rate of the coating material that forms the insulating layer 130 is in a range of 3000 Pa·s or more, the shape of the insulating layer 130 can be maintained.

### <Other Embodiments of the Present Disclosure>

An embodiment of the present disclosure has been specifically described above, but the present disclosure is not limited to the above-described embodiment, and various modifications can be made without departing from the scope of the present disclosure.

In the above-described embodiment, a case where the resin composition molded body as the insulating layer is mechanically mixed and extruded has been described, but the resin composition molded body may be polymerized and extruded.

In the above-described embodiment, a case where the power cable 10 does not need to have a water-shielding layer has been described, but the present disclosure is not limited to this. The power cable 10 may have a simple water-shielding layer by having the above-described remarkable water tree suppressing effect. Specifically, the simple water-shielding layer is constituted from, for example, a metal laminate tape. The metal laminate tape includes, for example, a metal layer constituted from aluminum, copper, or the like, and an adhesive layer provided on one surface or both surfaces of the metal layer. The metal laminate tape is, for example, longitudinally wrapped so as to surround the outer periphery of the cable core (further to the outer periphery than the outer semiconductive layer). The water-shielding layer may be provided outside the shielding layer or may also serve as the shielding layer. With such a configuration, the cost of the power cable 10 can be reduced.

In the above-described embodiment, the case where the power cable 10 is configured to be laid on land, underwater, or in a subaqueous area has been described, but the present disclosure is not limited to this. For example, the power cable 10 may be configured as a so-called overhead electrical wire (an overhead insulated electrical wire).

Next, examples according to the present disclosure will be described. These examples are merely examples of the present disclosure, and the present disclosure is not limited by these examples.

### (1) Material

First, Materials A to D shown in Table 1 below were prepared as semiconductive compositions. The following were used as each component in the preparation of Materials A to D.

As the propylene-based resin, a plurality of different types of propylene random polymers having the ranges of a viscosity at a high shear rate of 100 Pa·s or more and 6000 Pa·s or less, a viscosity at a low shear rate of 500 Pa·s or more and 50000 Pa·s or less, a melting point of 140°C or higher and 145°C or lower, an enthalpy of fusion of 90 J/g or more and 105 J/g or less, a ratio Mw/Mn of the weight average molecular weight (Mw) to the number average molecular weight (Mn) of 3.0 or more and 8.0 or less, Mn of 60000 to 150000, and Mw of 210000 to 1000000 were prepared.

As the rubber material, a plurality of different types of EPR and VLDPE having a viscosity at a high shear rate of 500 Pa·s or more and 5000 Pa·s or less, a viscosity at a low shear rate of 10000 Pa·s or more and 70000 Pa·s or less, and no melting point and no enthalpy of fusion were prepared.

As the elastomer, a plurality of different types of styrene-based resins having the ranges of a viscosity at a high shear rate of 1000 Pa·s or more and 6000 Pa·s or less, a viscosity at a low shear rate of 5000 Pa·s or more and 50000 Pa·s or less, a melting point of 30°C or higher and 80°C or lower, and an enthalpy of fusion of 5 J/g or more and 50 J/g or less were prepared.

As the carbon black, carbon black having an average particle size of 10 nm was used.

In this example, one or more types of propylene-based resins having physical properties within the above ranges were used singly or in combination, and one or more types of rubber materials and elastomers having physical properties within the above ranges were used. The ratio of the components was appropriately adjusted, and a predetermined amount of carbon black was added to 100 parts by mass of these resin components, and Materials A to D were prepared so that the viscosity of the resulting semiconductive composition at each shear rate was a predetermined value. Here, the addition ratio of the propylene-based resin was adjusted to be 50% by mass or more of the resin components.

**[Table 1]**

| | | Type | Material A | Material B | Material C | Material D |
|---|---|---|---|---|---|---|
| | Resin component | Melting point [°C] | 144 | 144 | 148 | 144 |
| | | Enthalpy of fusion [J/g] | 73 | 73 | 95 | 73 |
| Semiconductive composition | Content of carbon black [parts by mass] | | 40 | 60 | 40 | 80 |
| | Viscosity at high shear rate (A) [Pa·s] | | 3500 | 4800 | 2000 | 7000 |
| | Viscosity at low shear rate (B) [Pa·s] | | 500000 | 750000 | 55000 | 850000 |
| | (B)/(A) | | 142.9 | 156.3 | 27.5 | 121.4 |

In Table 1, the melting points and enthalpies of fusion of the resin components contained in Materials A to D, and the viscosities of Materials A to D at a high shear rate and a low shear rate were measured as follows.

### [Melting Point and Enthalpy of Fusion]

The melting points and enthalpies of fusion of the resin components contained in Materials A to D were determined by DSC measurement. The DSC measurement was performed in accordance with JIS-K-7121 (1987). Specifically, DSC 8500 (input compensation type; manufactured by PerkinElmer) was used as a DSC apparatus. The reference sample was, for example, α-alumina. The mass of the measurement sample was 8 to 10 g. In the DSC apparatus, the temperature was raised from room temperature (27°C) to 220°C at 10°C/min. Thus, a DSC curve was obtained by plotting the endothermic heat amount (heat flow) per unit time with respect to temperature.

At this time, the temperature at which the endothermic heat amount per unit time in each measurement sample was the maximum (the highest peak) was defined as the "melting point". At this time, in the DSC curve, the area of the region surrounded by the melting peak and the baseline was obtained to determine the "enthalpy of fusion".

### [Viscosity]

The viscosity of Materials A to D at each shear rate was measured using a rotary rheometer ("MCR 302" manufactured by Anton Paar) at 190°C using a jig PP-12 while changing the shear rate from 0.001 s⁻¹ to 1000 s⁻¹.

### (2) Production of Sample of Power Cable

In this example, a resin composition for forming the insulating layer was additionally prepared separately from Materials A to D as semiconductive compositions. Specifically, the propylene-based resin, rubber material, and elastomer used in the preparation of the semiconductive composition described above were appropriately mixed to prepare Composition A for forming the insulating layer having a viscosity at a high shear rate of 1000 Pa·s and a viscosity at a low shear rate of 5000 Pa·s. In addition, the mixing ratio of the components was appropriately changed to prepare Composition B for forming the insulating layer having a viscosity at a high shear rate of 100 Pa·s and a viscosity at a low shear rate of 800 Pa·s.

Subsequently, a sample simulating the power cable was produced using Compositions A and B for forming the insulating layer and Materials A to D as semiconductive compositions.

### (Sample 1)

Specifically, as shown in Table 2 below, a conductor with a cross-sectional area of 200 mm² (conductor diameter of approximately 16.0 mm) was first prepared. After the conductor was prepared, Material A prepared above as a coating material for forming the inner semiconductive layer, Composition A for forming the insulating layer, and Material A prepared above as a coating material for forming the outer semiconductive layer were put into extruders A to C, respectively. The extrudates from extruders A to C were guided to the common head, and the inner semiconductive layer, the insulating layer, and the outer semiconductive layer were simultaneously extruded onto the outer periphery of the conductor from the inside to the outside. At this time, the thicknesses of the inner semiconductive layer, the insulating layer, and the outer semiconductive layer were set to 0.5 mm, 9.0 mm, and 0.5 mm, respectively, and the insulating coating thickness was set to 10 mm. As a result, Sample 1 of the power cable (with the cable outer diameter of 36 mm) having the conductor, inner semiconductive layer, insulating layer, and outer semiconductive layer from the center to the outer periphery was manufactured. Assuming that the conductor diameter is X and the outer diameter of the power cable (cable outer diameter) is Y, the ratio (Y/X) of the cable outer diameter to the conductor diameter was 1.9.

**[Table 2]**

| | | Sample | | | | |
|---|---|---|---|---|---|---|
| | | 1 | 2 | 3 | 4 | 5 |
| Cable configuration | Type of semiconductive | Material A | Material B | Material C | Material D | Material A |
| | composition | | | | | |
| | Type of material for forming insulating layer | Composition A | Composition A | Composition A | Composition A | Composition B |
| | Cross-sectional area of conductor [mm²] | 200 | 200 | 200 | 200 | 200 |
| | Conductor diameter (X) [mm] | 16.0 | 16.0 | 16.0 | 16.0 | 16.0 |
| | Insulating coating thickness [mm] | 10 | 10 | 10 | 10 | 10 |
| | Cable outer diameter (Y) [mm] | 36.0 | 36.0 | 36.0 | 36.0 | 36.0 |
| | Y/X | 1.9 | 1.4 | 1.6 | 2.9 | 3.6 |
| Evaluation | Uniformity of outer diameter in cross section | 1.1 | 1.03 | 1.7 | Not extrudable | 1.35 |
| | Uniformity of outer diameter in longitudinal direction | 1.15 | 1.05 | 1.85 | Not extrudable | 1.5 |

### (Samples 2 to 5)

In Samples 2 to 5, as shown in Table 2, the type of the semiconductive composition was changed to Materials B to D, or the type of the composition for forming the insulating layer was changed to Composition B, as appropriate. Except for this, power cables were produced in the same manner as Sample 1 and Samples 2 to 5 were obtained.

### (3) Evaluation

Samples 1 to 5 produced as power cables were evaluated for the uniformity of the outer diameter in the cross section of the power cable and the uniformity of the outer diameter in the longitudinal direction.

The uniformity of the outer diameter in the cross section was evaluated as follows. Specifically, any one point in the longitudinal direction in the power cable was selected, the outer diameter in the outer peripheral direction in the cross section was measured, the major axis (maximum value) and the minor axis (minimum value) were obtained, and the ratio of the major axis to the minor axis was calculated. The smaller ratio indicates the smaller variation in the outer diameter in the cross section.

The uniformity of the outer diameter in the longitudinal direction was evaluated as follows. Specifically, two points spaced apart by 5 m in the longitudinal direction of the power cable were selected, the major axis and the minor axis at each point were measured, and the ratio of the major axis at one of the two points to the minor axis at the other one of the two points was calculated. The smaller ratio indicates the smaller variation in the outer diameter in the longitudinal direction.

### (4) Evaluation results

As shown in Table 2, in Samples 1 and 2, it was confirmed that the use of Material A or Material B as the semiconductive composition could reduce variation in the outer diameter in each of the cross-section and the longitudinal direction. This can be considered to be because Material A and Material B were able to limit the sagging of Composition A for forming the insulating layer, and maintain its shape.

In addition, it was confirmed that since Sample 3 used Material C, which has an excessively low viscosity at a low shear rate, it was not possible to limit the sagging of Composition A for forming the insulating layer, and sufficiently limit variation in the outer diameter of the power cable.

In addition, it was confirmed that since Sample 4 used Material D, which has an excessively high viscosity at a high shear rate, as the semiconductive composition, it had poor extrusion moldability and could not be molded into a semiconductive layer.

In addition, it was confirmed that since Sample 5 used Composition B, which has a lower viscosity at a low shear rate than Composition A for forming the insulating layer, variation in the outer diameter of the power cable was greater than that of Sample 1.

### <Supplementary Descriptions>

Hereinafter, modes of the present disclosure will be supplementary described.

### (Supplementary description 1)

A semiconductive composition for forming a semiconductive layer in a power cable, the composition including:
a resin component including a propylene-based resin, and at least one selected from the group of a rubber material and an elastomer; and
carbon black,
wherein the rubber material and the elastomer each includes at least two units from among ethylene, propylene, butylene, hexene, isoprene, octene, and styrene, and
the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

### (Supplementary description 2)

A power cable including:
a conductor;
an insulating layer formed from a resin composition and covering an outer periphery of the conductor; and
an outer semiconductive layer formed from a semiconductive composition and covering an outer periphery of the insulating layer,
wherein the semiconductive composition includes
a resin component including a propylene-based resin, and at least one selected from the group of a rubber material and an elastomer, and
carbon black,
the rubber material and the elastomer each includes at least two units from among ethylene, propylene, butylene, hexene, isoprene, octene, and styrene, and
the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

### (Supplementary description 3)

The power cable according to Supplementary description 2,
wherein the content of the carbon black is 10 parts by mass or more and 100 parts by mass or less with respect to 100 parts by mass of the resin component.

### (Supplementary description 4)

The power cable according to Supplementary description 2 or 3,
wherein the enthalpy of fusion of the resin component is 55 J/g or more and 90 J/g or less.

### (Supplementary description 5)

The power cable according to any one of Supplementary descriptions 2 to 4,
wherein the melting point of the resin component is 140°C or higher and 170°C or lower.

### (Supplementary description 6)

The power cable according to any one of Supplementary descriptions 2 to 5,
wherein in a cross section of the power cable perpendicular to a longitudinal direction of the power cable, a ratio of the major axis to the minor axis is 1.3 or less.

### (Supplementary description 7)

The power cable according to any one of Supplementary descriptions 2 to 6,
wherein in cross sections of the power cable taken at two points spaced apart in a longitudinal direction of the power cable, a ratio of the major axis at one of the two points to the minor axis at the other one of the two points is 1.3 or less.

### (Supplementary description 8)

The power cable according to any one of Supplementary descriptions 2 to 7,
wherein the thickness of the outer semiconductive layer is 0.5 mm or more, and a ratio of the outer diameter of the power cable to the outer diameter of the conductor is 4 or less.

### (Supplementary description 9)

The power cable according to any one of Supplementary descriptions 2 to 8,
wherein the propylene-based resin has a viscosity of 100 Pa·s or more and 6000 Pa·s or less at the high shear rate, and a viscosity of 500 Pa·s to 50000 Pa·s or less at the low shear rate.

### (Supplementary description 10)

The power cable according to any one of Supplementary descriptions 2 to 9,
wherein the propylene-based resin has a melting point of 140°C or higher and 150°C or lower and an enthalpy of fusion of 90 J/g or more and 105 J/g or less.

### (Supplementary description 11)

The power cable according to any one of Supplementary descriptions 2 to 10,
wherein the rubber material and the elastomer each has a viscosity of 300 Pa·s or more and 7000 Pa·s or less at the high shear rate, and a viscosity of 4000 Pa·s or more and 80000 Pa·s or less at the low shear rate.

### (Supplementary description 12)

The power cable according to any one of Supplementary descriptions 2 to 11,
wherein the rubber material does not have a melting point or has a melting point of 100°C or lower.

### (Supplementary description 13)

The power cable according to any one of Supplementary descriptions 2 to 12,
wherein the rubber material has an enthalpy of fusion of 50 J/g or less.

### [Reference Signs List]

- 10: Power cable
- 110: Conductor
- 120: Inner semiconductive layer
- 130: Insulating layer
- 140: Outer semiconductive layer
- 150: Shielding layer
- 160: Sheath

## Claims

1. A semiconductive composition for forming a semiconductive layer in a power cable, the composition comprising:
a resin component including a propylene-based resin, and at least one selected from the group of a rubber material and an elastomer; and
carbon black,
wherein the rubber material and the elastomer each includes at least two units from among ethylene, propylene, butylene, hexene, isoprene, octene, and styrene, and
the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

2. A power cable comprising:
a conductor;
an insulating layer formed from a resin composition and covering an outer periphery of the conductor; and
an outer semiconductive layer formed from a semiconductive composition and covering an outer periphery of the insulating layer,
wherein the semiconductive composition comprises
a resin component including a propylene-based resin, and at least one selected from the group of a rubber material and an elastomer, and
carbon black,
the rubber material and the elastomer each includes at least two units from among ethylene, propylene, butylene, hexene, isoprene, octene, and styrene, and
the semiconductive composition has a viscosity of 1000 Pa·s or more and 5000 Pa·s or less at a high shear rate with a shear rate of 100 s⁻¹ at a temperature of 190°C, and a viscosity of 100000 Pa·s or more and 1000000 Pa·s or less at a low shear rate with a shear rate of 1 s⁻¹ at a temperature of 190°C.

3. The power cable according to claim 2,
wherein the content of the carbon black is 10 parts by mass or more and 100 parts by mass or less with respect to 100 parts by mass of the resin component.

4. The power cable according to claim 2 or 3,
wherein the enthalpy of fusion of the resin component is 55 J/g or more and 90 J/g or less.

5. The power cable according to any one of claims 2 to 4,
wherein the melting point of the resin component is 140°C or higher and 170°C or lower.

6. The power cable according to any one of claims 2 to 5,
wherein in a cross section of the power cable perpendicular to a longitudinal direction of the power cable, a ratio of the major axis to the minor axis is 1.3 or less.

7. The power cable according to any one of claims 2 to 6,
wherein in cross sections of the power cable taken at two points spaced apart in a longitudinal direction of the power cable, a ratio of the major axis at one of the two points to the minor axis at the other one of the two points is 1.3 or less.

8. The power cable according to any one of claims 2 to 7,
wherein the thickness of the outer semiconductive layer is 0.5 mm or more, and a ratio of the outer diameter of the power cable to the outer diameter of the conductor is 4 or less.
